# EUROPÄISCHE PATENTSCHRIFT

(11) **EP 1 863 689 B1**
(45) Veröffentlichungstag und Bekanntmachung des Hinweises auf die Patenterteilung: **03.11.2010**
(21) Anmeldenummer: 06701162.7
(22) Anmeldetag: 25.01.2006
(51) Int. Cl.: B60T 8/40, H02P 7/29

(54) **OPTIMIERTE ERFASSUNG DER NACHLAUFSPANNUNG BEI DC-MOTOREN**
OPTIMAL CAPTURING OF A DC-MOTOR RESIDUAL VOLTAGE
SAISIE OPTIMALISEE DE LA TENSION RESIDUELLE DE MOTEURS A COURANT CONTINU

(30) Priorität: 22.03.2005 DE 102005013143
(43) Veröffentlichungstag der Anmeldung: 12.12.2007
(73) Patentinhaber: Robert Bosch GmbH, 70442 Stuttgart (DE)
(72) Erfinder: EMDE, Christoph, 74211 Leingarten (DE); PEVELING, Wolfgang, 71522 Backnang (DE); KOERNER, Gotthilf, 71287 Weissach (DE); SCHMIDTLEIN, Andreas, 71732 Tamm (DE); WEEBER, Volker, 74348 Lauffen A. N. (DE); NOLLER, Achim, 71691 Freiberg am Neckar (DE); BOCK, Heiko, 37547 Kreiensen (DE); NIEMEYER, Dirk, 72768 Reutlingen (DE)
(86) Internationale Anmeldenummer: PCT/EP2006/050442
(87) Internationale Veröffentlichungsnummer: WO 2006/100139

(56) Entgegenhaltungen:
- DE-A1- 4 303 206
- DE-A1- 10 158 846
- DE-A1- 19 914 404
- US-A- 5 811 947

## Beschreibung

### Stand der Technik

Die Erfindung betrifft eine Vorrichtung zur Erfassung der Nachlaufspannung eines Gleichstrommotors nach dem Oberbegriff des Patentanspruchs 1 sowie ein entsprechendes Verfahren nach dem Oberbegriff des Patentanspruchs 6.

Für verschiedene Anwendungen ist es erforderlich, die Drehzahl von Gleichstrommotoren zu erfassen. Dabei kann die Drehzahl aus der Nachlaufspannung bei einer getakteten Ansteuerung des Motors abgeleitet werden. So wird beispielsweise in der DE 199 14 404 die Nachlaufspannung eines Pumpenmotors in der ungetakteten Pulspause genutzt, um die Drehzahl der Pumpe zu bestimmen.

In der DE 195 28 697 A1 wird ein Verfahren beschrieben, bei dem ausgehend von einer Größe, die ein Maß für die Drehzahl der Förderpumpe darstellt, eine Druckgröße an einer Förderpumpe, beispielsweise in einer Bremsanlage, bestimmt wird.

Aus der DE 199 46 777 A1 ist ein Verfahren zur Abschätzung eines Vordruck zwischen einem Hauptbremszylinder und einem Einlaßventil eines Radbremszylinders einer Kraftfahrzeug-Bremsanlage bekannt. Dabei wird der Vordruck unter Berücksichtigung einer Nachlaufspannung eines getaktet betreibbaren Motors einer Pumpe zur Förderung von Bremsflüssigkeit geschätzt.

Üblicherweise erfolgt die Erfassung der Nachlaufspannung im Stand der Technik über eine Mittelung von Momentanwerten der Motorspannung in der Pulspause. Diese Mittelung ist notwendig, da die generatorische Nachlaufspannung durch das sog. Bürstenfeuer mit recht großen Störsignalen durchsetzt ist. Die Aufnahme der Momentanwerte wird beispielsweise durch die Taktung eines Mikroprozessors gesteuert, wobei zur Erzielung eines Messsignals ausreichender Güte mehrere Momentanwerte aufgenommen werden müssen, da die Streuung der Momentanwerte sehr groß sein kann. Aus dem so erhaltenen Mittelwert wird dann die Drehzahl des Gleichstrommotors berechnet.

Aus der US 5 811 947 A oder der nicht vorveröffentlichen Schrift DE 103 59 224 A1 ist bekannt, nach dem Einsetzen der Pulspause erst eine vorgebbare erste Zeitdauer abzuwarten, bevor die Erfassung der Nachlaufspannung gestartet wird. Somit können Schwankungen, die durch den Stromabbau unmittelbar nach Beginn der Pulspause entstehen, ausgeblendet werden.

Eine Vorrichtung bzw. ein Verfahren gemäß dem Oberbegriff der Ansprüche 1 bzw. 6 ist aus der De 199 14 404 A1 bekannt.

### Vorteile der Erfindung

Die Erfindung beschreibt eine Vorrichtung und ein Verfahren zur Erfassung der Nachlaufspannung eines Gleichstrommotors, wobei der Gleichstrommotor durch eine getaktete Ansteuerung betrieben wird. Im Normalbetrieb wird der Gleichstrommotor mittels einer PWM-Ansteuerung und einem ersten vorgebbaren Puls/Pulspausenverhältnis angesteuert. Zur Erfassung einer Nachlaufspannungsgröße, die die Nachlaufspannung des Motors repräsentiert, ist ein Auswertemittel vorgesehen. Weiterhin ist vorgesehen, dass zur Erfassung der Nachlaufspannungsgröße der Gleichstrommotor mit einem vorgebbaren variablen zweiten Puls/Pulspausenverhältnis angesteuert wird. Der Kern der Erfindung besteht nun darin, dass der durch das zweite Puls/Pulspausenverhältnis an den Gleichstrommotor angelegte Strom während einer vorgebbaren ersten Zeitdauer t_{Abbau} ausgehend von dem während der getakteten Ansteuerung mit dem ersten vorgebbaren Puls/Pulspausenverhältnis an den Motor angelegten Strom auf einen niedrigeren Wert abgebaut wird.

Mit der vorliegenden Erfindung wird somit die Aufgabe gelöst, Störungen, die aufgrund von parasitären Induktivitäten und Kapazitäten im Steuergerät und/oder in den Versorgungsleitungen gebildet werden, zu minimieren.

In einer Weiterbildung der Erfindung erfolgt die Erfassung der Nachlaufspannungsgröße im Anschluss an die Ansteuerung des Gleichstrommotors mit dem zweiten Puls/Pulspausenverhältnis. Alternativ bzw. optional kann die Erfassung auch im Anschluss an die erste Zeitdauer erfolgen. Darüber hinaus ist auch denkbar, dass die Erfassung durch das Erreichen eines vorgebbaren Schwellenwerts gestartet wird, wobei insbesondere vorgesehen ist, dass der vorgebbare Schwellenwert einen Wert von 0 bzw. einen Wert nahe bei Null aufweist.

In einer Ausgestaltung der Erfindung erfolgt die Erfassung der Nachlaufspannungsgröße während einer zweiten Zeitdauer t_{Mess}. Nach der Erfassung der Nachlaufspannungsgröße ist im Allgemeinen vorgesehen, dass die Ansteuerung des Gleichstrommotors wieder in den Normalbetrieb übergeht, d.h. mit dem ersten Puls/Pulspausenverhältnis angesteuert wird. Dies kann beispielsweise im Anschluss an die zweite Zeitdauer der Fall sein. Somit erfolgt eine erneute Ansteuerung des Gleichstrommotors mit dem ersten Puls/Pulspausenverhältnisses nach einer Zeitdauer die aus t_{Abbau} und tₘₑₛₛ besteht.

Vorteilhafterweise wird das Pulsweitenmodulationstastverhältnis (PWM) im zweiten Puls/Pulspausenverhältnis während der ersten Zeitdauer vom angesteuerten Wert (d.h. der Pulshöhe) des ersten Puls/Pulspausenverhältnisses auf den Schwellenwert reduziert. In einer optionalen Anwendung der Erfindung ist dabei vorgesehen, dass diese Reduzierung linear erfolgt.

In einer weiteren Ausgestaltung der Erfindung ist vorgesehen, dass die Zeitdauer der Pausenansteuerung des PWM-Tastverhältnisses im zweiten Puls/Pulspausenverhältnis während der ersten Zeitdauer kontinuierlich erhöht wird, d.h. verlängert wird. Diese Erhöhung kann beispielsweise ebenfalls linear erfolgen.

### Zeichnungen

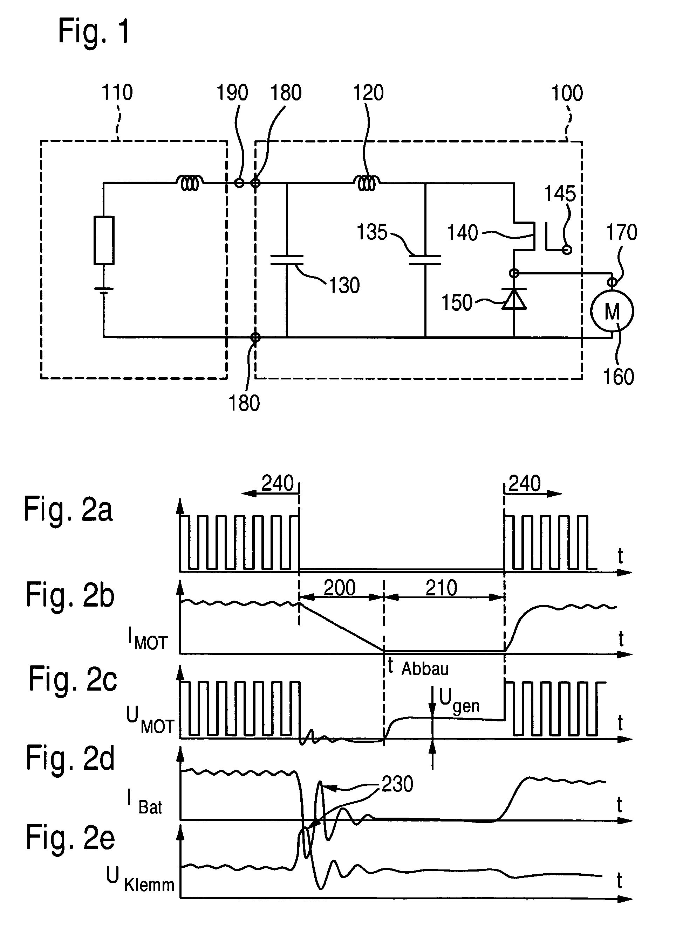

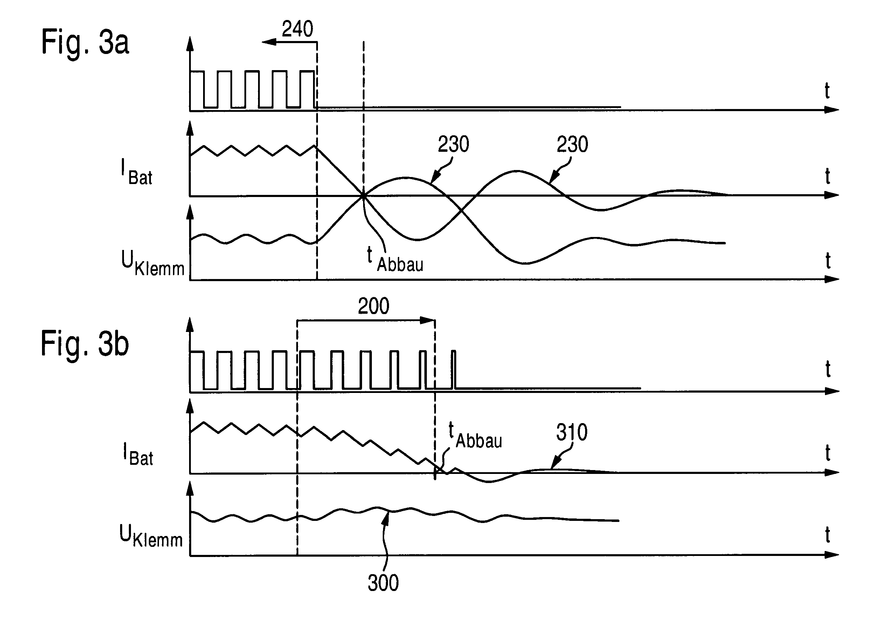

In Figur 1 ist schematisch die Beschaltung eines Gleichstrommotors für eine hochfrequente Taktung dargestellt. Die Diagramme in den Figuren 2a bis e zeigen den zeitlichen Verlauf von Spannung und Strom am Gleichstrommotor sowie im Bordnetz. Die Figuren 3a und 3b zeigen einen Vergleich zwischen dem Stand der Technik und der Anwendung der vorgeschlagenen Erfindung nach der Ansteuerung mit dem ersten Puls/Pulspausenverhältnis.

### Ausführungsbeispiel

Die Figur 1 zeigt schematisch einen Schaltungsaufbau, wie er verwendet wird, um einen (Pumpen-)Motor, beispielsweise in der Bremsanlage eines Kraftfahrzeugs, hochfrequent anzusteuern. Dabei wird ausgehend von einem Bordnetz 110 ein Steuergerät 100 versorgt, das seinerseits wiederum den Gleichstrommotor 160 getaktet betreibt. Innerhalb des Steuergeräts 100 erzeugt die Ansteuerung des Transistors 140 über einen entsprechenden Anschluss 145 für die getaktete Ansteuerung des Gleichstrommotors 160. Die im Steuergerät 100 vorgesehene Spule 120 soll in Verbindung mit dem Kondensator 130 als Filter fungieren, um Schwankungen vom Bordnetz auszufiltern. Zur Erfassung der Nachlaufspannung wird üblicherweise die Motorspannung im Versorgungspfad hinter dem Halbleiterschalter 140 abgegriffen. Dies geschieht über einen Spannungsteiler, der in der Figur 1 als Diode 150 dargestellt ist. Zusammen mit dem Kondensator 135 stellt der Spannungsteiler einen Tiefpassfilter dar, mittels dem die Nachlaufspannung für eine entsprechende Auswertung aufbereitet werden kann. Die Aufbereitung erfolgt üblicherweise durch einen AD-Wandler in einem Mikroprozessor, wobei das Signal zyklisch in einem vom Betriebssystem vorgegebenen Takt eingelesen wird (z.B. 1 ms, 5 ms ...).

Wie in Figur 1 eingezeichnet, kann die Bordspannung bzw. Batteriespannung über die Klemmen 180 und der Batteriestrom über einen Mess- bzw. Klemmanschluss 190 erfasst werden. Eine entsprechende Messeinrichtung zur Erfassung des Motorstroms ist über eine Einrichtung 170 möglich.

In den Zeitdiagrammen der Figuren 2a bis e ist die getaktete Ansteuerung des Gleichstrommotors dargestellt, wie er aus dem Stand der Technik bekannt ist. In Figur 2a ist die getaktete Ansteuerung vor und nach der Nachlaufspannungsmessung dargestellt. Wie im Diagramm der Figur 2a zu erkennen ist, wird der Motor im Normalbetrieb 240 üblicherweise durch äquidistante Impulse mit einer entsprechenden Impulslänge getaktete angesteuert. Figur 2b zeigt den Strom, der über den Gleichstrommotor 160 fließt. Im Bereich 200 ist zu erkennen, dass der Motorstrom I_{Mot} nach Unterbrechung der getakteten Ansteuerung abfällt (Stromabbauphase). Da keine weitere Ansteuerung stattfindet, fällt der Motorstrom auf einen Wert nahezu 0. Dieses Absinken des Motorstroms erfolgt in einer ersten Zeitdauer t_{Abbau}. Nach Abklingen des Motorstroms kann in einer zweiten Phase 210 die Nachlaufspannung U_{gen} (U_{Gen}= generatorische Nachlaufspannung) erfasst werden, bevor die getaktete Ansteuerung des Gleichstrommotors erneut vorgenommen wird. In Figur 2c ist zu erkennen, dass die Nachlaufspannung am Gleichstrommotor nach dem Stromabbau innerhalb des Bereichs 210 bzw. einer zweiten Zeitdauer t_{Mess} erfasst wird.

Nach Abschalten der getakteten Ansteuerung des Gleichstrommotors kommt es zu Schwankungen im Bordnetz. So sind, wie in Figur 2c dargestellt, Stromschwingungen bzw. Spannungsspitzen wie in Figur 2e dargestellt, unmittelbar nach Abschaltung der getakteten Ansteuerung zu erkennen. Diese Störungen beeinflussen die Erfassung der Nachlaufspannung negativ.

In Figur 3a ist die Abschaltung der getakteten Ansteuerung vergrößert dargestellt. Wie bereits geschildert, wird im Bereich 240 zunächst der Gleichstrommotor mit äquidistanten Impulsen angesteuert. Das Bordnetz in Gestalt des Batteriestroms bzw. der Bordnetzspannung zeigt entsprechend der getakteten Ansteuerung typische Wellenmuster. Nach Abschaltung der getakteten Ansteuerung kommt es im Batteriestrom bzw. bei der Bordnetzspannung zu Schwingungen mit Spannungs- bzw. Stromspitzen 230. Die Ursache für diese Schwingungen liegen darin, dass beim Abschalten des Motors die in der Bordnetzinduktivität und der Filterdrossel gespeicherten Energie abgebaut wird. Dies führt zur Anregung des bordnetzeigenen LC-Schwingkreises, der aus den Filterelementen im Steuergerät und parasitären Induktivitäten und Kapazitäten in der Versorgungsleitung gebildet wird. Somit entstehen an der Spannung, die an den Klemmen 180 abgenommen werden kann sowie auf dem an der Messstelle 190 erfassten Strom Störsignale.

Um die Erfassung der generatorischen Nachlaufspannung möglichst ohne Störung und ohne Rückwirkung ins Bordnetz durchzuführen, wird im vorliegenden Ausführungsbeispiel ein kontrollierter bzw. verlangsamter Abbau des Bordnetzstroms während der getakteten Ansteuerung durchgeführt. Ein derartig kontrollierter Abbau des Bordnetzstroms wird beispielsweise anhand der in Figur 3b dargestellten linearen Änderung des PWM-Tastverhältnisses gezeigt. Dabei wird die Pulslänge, die während der getakteten Ansteuerung verwendet wird, linear reduziert, bis die Pulslänge nahezu auf 0 reduziert ist. Wie in Figur 3b dargestellt, wird der Stromabbau während der Phase 200 durch die lineare Reduzierung der getakteten Ansteuerung kaskadenförmig abgebaut. Nach dem vollständigen Abschalten der getakteten Ansteuerung bleiben somit nur noch geringe Schwankungen 310 übrig, die nur noch geringe Auswirkungen auf die Erfassung der Nachlaufspannung haben. Auch bei der Bordnetzspannung ist nur ein leichtes Ansteigen 300 während der linearen Verminderung der Ansteuerung zu erkennen. Durch einen derartig kontrollierten Abbau des Bordnetzstroms können die Störungen im Bordnetz nach Abschaltung der getakteten Ansteuerung signifikant reduziert werden. Im Anschluss an die Erfassung der Nachlaufspannung kann der Motor sofort wieder seinen regulären Betrieb aufnehmen, indem die ursprünglich verwendete getaktete Ansteuerung wieder aufgenommen werden kann.

Neben der Reduzierung der Pulslänge, wie in Figur 3b dargestellt, kann in einem weiteren Ausführungsbeispiel auch vorgesehen sein, die Pulspausen dieses zweiten Puls/Pulspausenverhältnisses nach Abschaltung des ersten Puls/Pulspausenverhältnisses im Bereich 240 sukzessive zu erhöhen.

In einem weiteren Ausführungsbeispiel ist vorgesehen, den am Motor 160 anliegenden Strom I_{Mot} mit einem vorgebbaren Schwellenwert zu vergleichen. Dabei wird die Erfassung der Nachlaufspannung erst bei Unterschreitung des Strom I_{Mot} unter den vorgegebenen Schwellenwert gestartet.

## Patentansprüche

1. Vorrichtung zur Erfassung der Nachlaufspannung eines Gleichstrommotors (100), wobei
- der Motor (100) eine getaktete Ansteuerung mit einem ersten vorgebbaren Puls/Pulspausenverhältnis aufweist und
- wenigstens ein Auswertemittel (140, 210, 220, 230, 500) zur Erfassung einer Nachlaufspannungsgröße vorgesehen ist, wobei die Nachlaufspannungsgröße die Nachlaufspannung des Motors repräsentiert und
- der Motor (100) zur Erfassung der Nachlaufspannungsgröße mit einem vorgebbaren variablen zweiten Puls/Pulspausenverhältnis angesteuert wird,
**dadurch gekennzeichnet, dass**
das der durch das zweite Puls/Pulspausenverhältnis an den Motor angelegte Strom während einer vorgebbaren ersten Zeitdauer t_{Abbau} ausgehend von dem während der getakteten Ansteuerung mit dem ersten vorgebbaren Puls/Pulspausenverhältnis an den Motor angelegten Strom auf einen niedrigeren Wert abgebaut wird.

2. Vorrichtung nach Anspruch 1, **dadurch gekennzeichnet, dass** die Erfassung der Nachlaufspannungsgröße im Anschluss
- an das zweite Puls/Pulspausenverhältnis und/oder
- an die erste Zeitdauer t_{Abbau} und/oder
- durch das Erreichen eines vorgebbaren Schwellenwerts innerhalb der Stromabbauphase während der ersten Zeitdauer
erfolgt,
wobei insbesondere vorgesehen ist, dass der Schwellenwert einen Wert von Null bzw. einen Wert nahe bei Null aufweist.

3. Vorrichtung nach Anspruch 1, **dadurch gekennzeichnet, dass** die Erfassung der Nachlaufspannungsgröße während einer zweiten Zeitdauer tₘₑₛₛ erfolgt, wobei vorgesehen ist, dass im Anschluss an die zweite Zeitdauer der Motor mit dem ersten Puls/Pulspausenverhältnis angesteuert wird.

4. Vorrichtung nach Anspruch 1, **dadurch gekennzeichnet, dass** das PWM-Tastverhältnis im zweiten Puls/Pulspausenverhältnis während der ersten Zeitdauer vom angesteuerten Wert des ersten Puls/Pulspausenverhältnisses auf den Schwellenwert reduziert wird, wobei insbesondere vorgesehen ist, dass die Reduzierung linear erfolgt.

5. Vorrichtung nach Anspruch 1, **dadurch gekennzeichnet, dass** die Zeitdauer der Pausenansteuerung des PWM-Tastverhältnis im ersten Puls/Pulspausenverhältnis während der ersten Zeitdauer kontinuierlich erhöht wird, wobei insbesondere vorgesehen ist, dass die Erhöhung linear erfolgt.

6. Verfahren zur Erfassung der Nachlaufspannung eines Gleichstrommotors , insbesondere in einer Vorrichtung nach wenigstens einem der Ansprüche 1 bis 5, wobei der Motor (100)
- im Normalbetrieb eine getaktete Ansteuerung mit einem vorgebbaren ersten Puls/Pulspausenverhältnis und
- zur Erfassung einer die Nachlaufspannung repräsentierenden Nachlaufspannungsgröße eine getaktete Ansteuerung mit einem vorgebbaren variablen zweiten Puls/Pulspausenverhältnis
aufweist, **dadurch gekennzeichnet, dass**
das zweite Puls/Pulspausenverhältnis derart gesteuert wird, dass der an den Motor angelegte Strom während einer vorgebbaren ersten Zeitdauer t_{Abbau} ausgehend von dem während der getakteten Ansteuerung mit dem ersten vorgebbaren Puls/Pulspausenverhältnis an den Motor angelegten Strom auf einen niedrigeren Wert abgebaut wird.

7. Verfahren nach Anspruch 6, **dadurch gekennzeichnet, dass** die Erfassung der Nachlaufspannungsgröße im Anschluss
- an das zweite Puls/Pulspausenverhältnis und/oder
- an die erste Zeitdauer t_{Abbau} und/oder
- durch das Erreichen eines vorgebbaren Schwellenwerts innerhalb der Stromabbauphase während der ersten Zeitdauer
erfolgt,
wobei insbesondere vorgesehen ist, dass der Schwellenwert durch einen Wert von Null bzw. durch einen Wert nahe bei Null vorgegeben wird.

8. Verfahren nach Anspruch 6, **dadurch gekennzeichnet, dass** die Erfassung der Nachlaufspannungsgröße während einer zweiten Zeitdauer tₘₑₛₛ erfolgt, wobei vorgesehen ist, dass im Anschluss an die zweite Zeitdauer der Motor mit dem ersten Puls/Pulspausenverhältnis angesteuert wird.

9. Verfahren nach Anspruch 6, **dadurch gekennzeichnet, dass** das PWM-Tastverhältnis im zweiten Puls/Pulspausenverhältnis während der ersten Zeitdauer vom angesteuerten Wert des ersten Puls/Pulspausenverhältnisses auf den Schwellenwert reduziert wird, wobei insbesondere vorgesehen ist, dass die Reduzierung linear erfolgt.

10. Verfahren nach Anspruch 6, **dadurch gekennzeichnet, dass** die Zeitdauer der Pausenansteuerung des PWM-Tastverhältnis im ersten Puls/Pulspausenverhältnis während der ersten Zeitdauer kontinuierlich erhöht wird, wobei insbesondere vorgesehen ist, dass die Erhöhung linear erfolgt.

## Claims

1. Apparatus for detecting the run-on voltage of a DC motor (100), where
- the motor (100) is driven in a pulsed manner with a first predefinable mark-to-space ratio and
- at least one evaluation means (140, 210, 220, 230, 500) for detecting a run-on voltage variable is provided, with the run-on voltage variable representing the run-on voltage of the motor, and
- the motor (100) is driven with a predefinable variable second mark-to-space ratio in order to detect the run-on voltage variable,
**characterized in that**
the current which is applied to the motor by the second mark-to-space ratio is reduced to a lower value during a predefinable first time period t_{reduce} starting from the current which is applied to the motor during the pulsed driving with the first predefinable mark-to-space ratio.

2. Apparatus according to Claim 1, **characterized in that** the run-on voltage variable is detected after
- the second mark-to-space ratio and/or
- the first time period t_{reduce} and/or
- by a predefinable threshold value being reached within the current reduction phase during the first time period,
with provision being made, in particular, for the threshold value to have a value of zero or a value close to zero.

3. Apparatus according to Claim 1, **characterized in that** the run-on voltage variable is detected during a second time period tₘₑₐₛᵤᵣₑ, with provision being made for the motor to be driven with the first mark-to-space ratio after the second time period.

4. Apparatus according to Claim 1, **characterized in that** the PWM duty cycle in the second mark-to-space ratio is reduced from the actuated value of the first mark-to-space ratio to the threshold value during the first time period, with provision being made, in particular, for the reduction to take place in a linear manner.

5. Apparatus according to Claim 1, **characterized in that** the duration of the space of the PWM duty cycle in the first mark-to-space ratio is continuously increased during the first time period, with provision being made, in particular, for the increase to take place in a linear manner.

6. Method for detecting the run-on voltage of a DC motor, in particular in an apparatus according to at least one of Claims 1 to 5, with the motor (100)
- being driven in a pulsed manner with a predefinable first mark-to-space ratio during normal operation, and
- being driven in a pulsed manner with a predefinable variable second mark-to-space ratio for detecting a run-on voltage variable which represents the run-on voltage,
**characterized in that**
the second mark-to-space ratio is controlled in such a way that the current which is applied to the motor is reduced to a lower value during a predefinable first time period t_{reduce} starting from the current which is applied to the motor during the pulsed driving with the first predefinable mark-to-space ratio.

7. Method according to Claim 6, **characterized in that** the run-on voltage variable is detected after
- the second mark-to-space ratio and/or
- the first time period t_{reduce} and/or
- by a predefinable threshold value being reached within the current reduction phase during the first time period,
with provision being made, in particular, for the threshold value to be predefined by a value of zero or by a value close to zero.

8. Method according to Claim 6, **characterized in that** the run-on voltage variable is detected during a second time period tₘₑₐₛᵤᵣₑ, with provision being made for the motor to be driven with the first mark-to-space ratio after the second time period.

9. Method according to Claim 6, **characterized in that** the PWM duty cycle in the second mark-to-space ratio is reduced from the actuated value of the first mark-to-space ratio to the threshold value during the first time period, with provision being made, in particular, for the reduction to take place in a linear manner.

10. Method according to Claim 6, **characterized in that** the duration of the space of the PWM duty cycle in the first mark-to-space ratio is continuously increased during the first time period, with provision being made, in particular, for the increase to take place in a linear manner.

## Revendications

1. Dispositif de détection de la tension de marche par inertie d'un moteur (100) à courant continu, dans lequel :
le moteur (100) présente une commande cadencée à un premier rapport prédéterminé entre les impulsions et les pauses entre impulsions,
au moins un moyen d'évaluation (140, 210, 220, 230, 500) détecte le niveau de la tension de marche par inertie, le niveau de la tension de marche par inertie représentant la tension de marche par inertie du moteur et dans lequel :
pour détecter le niveau de la tension de marche par inertie, le moteur (100) est commandé à un deuxième rapport variable prédéterminé entre les impulsions et les pauses entre les impulsions,
**caractérisé en ce que**
partant du courant appliqué sur le moteur pendant la commande cadencée au premier rapport prédéterminé entre les impulsions et les pauses entre les impulsions, le courant appliqué sur le moteur au deuxième rapport entre les impulsions et les pauses entre les impulsions est abaissé à une valeur plus basse pendant une première durée prédéterminée t_{Abbau}.

2. Dispositif selon la revendication 1, **caractérisé en ce que** la détection du niveau de la tension de marche par inertie a lieu après le deuxième rapport entre les impulsions et les pauses entre les impulsions et/ou après la première durée t_{Abbau} et/ou lorsqu'une valeur de seuil prédéterminée a été atteinte à l'intérieur de la phase de diminution du courant pendant la première durée, et **en ce que** la valeur de seuil présente en particulier une valeur nulle ou une valeur proche de zéro.

3. Dispositif selon la revendication 1, **caractérisé en ce que** la détection du niveau de la tension de marche par inertie a lieu pendant une deuxième durée tₘₑₛₛ et **en ce qu'**après la deuxième durée, le moteur est commandé au premier rapport entre les impulsions et les pauses entre les impulsions.

4. Dispositif selon la revendication 1, **caractérisé en ce que** pendant la première durée, le rapport de cadençage de modulation de la largeur des impulsions au deuxième rapport entre les impulsions et les pauses entre les impulsions est réduit depuis la valeur commandée au premier rapport entre les impulsions et les pauses entre les impulsions jusqu'à la valeur de seuil, et **en ce que** la réduction s'effectue en particulier de manière linéaire.

5. Dispositif selon la revendication 1, **caractérisé en ce que** la durée de la commande des pauses du rapport de cadençage de modulation de la largeur des impulsions au premier rapport entre les impulsions et les pauses entre les impulsions est augmentée en continu pendant la première durée et **en ce que** l'augmentation est en particulier linéaire.

6. Procédé de détection de la tension de marche par inertie d'un moteur à courant continu, en particulier dans un dispositif selon l'une des revendications 1 à 5, dans lequel :
le moteur (100) présente en fonctionnement normal une commande cadencée à un premier rapport prédéterminé entre les impulsions et les pauses entre les impulsions et
pour la détection du niveau de la tension de marche par inertie qui représente la tension de marche par inertie, il présente une commande cadencée à un deuxième rapport variable prédéterminé entre les impulsions et les pauses entre les impulsions,
**caractérisé en ce que**
le deuxième rapport entre les impulsions et les pauses entre les impulsions est commandé de telle sorte que partant du courant appliqué sur le moteur pendant la commande cadencée au premier rapport prédéterminé entre les impulsions et les pauses entre les impulsions, le courant appliqué sur le moteur au deuxième rapport entre les impulsions et les pauses entre les impulsions est abaissé à une valeur plus basse pendant une première durée prédéterminée t_{Abbau}.

7. Procédé selon la revendication 6, **caractérisé en ce que** la détection du niveau de la tension de marche par inertie a lieu après le deuxième rapport entre les impulsions et les pauses entre les impulsions et/ou après la première durée t_{Abbau} et/ou lorsqu'une valeur de seuil prédéterminée a été atteinte à l'intérieur de la phase de diminution du courant pendant la première durée, et **en ce que** la valeur de seuil présente en particulier une valeur nulle ou une valeur proche de zéro.

8. Procédé selon la revendication 6, **caractérisé en ce que** la détection du niveau de la tension de marche par inertie a lieu pendant une deuxième durée tₘₑₛₛ et **en ce qu'**après la deuxième durée, le moteur est commandé au premier rapport entre les impulsions et les pauses entre les impulsions.

9. Procédé selon la revendication 6, **caractérisé en ce que** pendant la première durée, le rapport de cadençage de modulation de la largeur des impulsions au deuxième rapport entre les impulsions et les pauses entre les impulsions est réduit depuis la valeur commandée au premier rapport entre les impulsions et les pauses entre les impulsions jusqu'à la valeur de seuil, et **en ce que** la réduction s'effectue en particulier de manière linéaire.

10. Procédé selon la revendication 6, **caractérisé en ce que** la durée de la commande des pauses du rapport de cadençage de modulation de la largeur des impulsions au premier rapport entre les impulsions et les pauses entre les impulsions est augmentée en continu pendant la première durée et **en ce que** l'augmentation est en particulier linéaire.
